Europäisches Patentamt

(19) European Patent Office

Office européen des brevets

(11) Publication number: **0 136 056**
**B1**

(12) EUROPEAN PATENT SPECIFICATION

(45) Date of publication of patent specification: 01.06.88

(51) Int. Cl.⁴: **B 62 B 7/08**

(21) Application number: 84305680.5

(22) Date of filing: 21.08.84

(54) A collapsible push chair.

(30) Priority: 25.08.83 GB 8322893

(43) Date of publication of application:
03.04.85 Bulletin 85/14

(45) Publication of the grant of the patent:
01.06.88 Bulletin 88/22

(84) Designated Contracting States:
AT BE CH DE FR IT LI LU NL SE

(56) References cited:
DE-C- 222 486
FR-A-2 333 689
GB-A-1 455 114
GB-A-2 085 817
US-A-2 377 198
US-A-2 615 725
US-A-3 799 567
US-A-4 346 912

(73) Proprietor: ANDREWS MACLAREN LIMITED
Station Works, Long Buckby
Northampton NN6 7PF (GB)

(72) Inventor: Daykin, Kevin John Bolberry House
Creaton Road Hollowell
Northampton NN6. 8RP. (GB)
Inventor: Mortimer, Frank Radcliffe
104 Knoll Drive
Styvechale Conventry CV3. 5DD (GB)

(74) Representative: Johnson, Terence Leslie et al
Edward Evans & Co. Chancery House 53-64
Chancery Lane
London WC2A 1SD (GB)

## Description

The invention relates to a collapsible push chair constructed for ease of conversion between its erected and collapsed conditions. In particular, although not exclusively, the invention relates to a collapsible push chair which is substantially wholly constructed from moulded plastic structural components.

It is known to provide collapsible push chairs which each comprise a back rest portion, a seat portion, pairs of front and rear legs supporting the back rest and seat portions, and handle means as for example shown in GB—A—1455114 where front leg and back rest elements are formed of respective metal foldable frame members and rear leg and seat frame members are formed of respective foldable frame members, all the frame members being pivotally linked together to provide a foldable structure.

By constructing these components in the form of pivotally interconnected frame members, it is possible to convert the push chair between erected and compactly collapsed conditions but this mode of manufacture involves relatively high fabrication costs.

One form of construction devised in order to minimise this high cost of fabrication is disclosed in GB—A—2085817. This method involves the moulding of a single plastic component, but this provides only a plastic seat or carrier for a child, and not a collapsible push chair.

It is intended, by means of the present invention to provide a push chair in which these known disadvantages are at least alleviated. In particular, it is an object of the invention to provide a push chair which can be easily converted between its erected and collapsed conditions and which lends itself to construction substantially solely from moulded plastic components.

According to the invention there is provided a collapsible push chair comprising a back rest portion, a seat portion, pairs of front and rear legs supporting the seat and back rest portions, handle means comprising at least one shaft connected to the back rest portion for pivotal movement about a second horizontal axis parallel to a first horizontal axis between first and second positions, respectively corresponding to the erected and collapsed conditions of the push chair, in which said shaft extends, respectively, away from the front legs and alongside the rear legs, positioning means being provided for releasably locking said shaft relative to the back rest portion when the push chair is in its erected condition, and link means extending between pivotal connections with said shaft and at least one of the rear legs for pivotal movement about third and fourth horizontal axes which are parallel to the first and second horizontal axes so that movement of said shaft between its first and second positions effects movement of first and second structural components between their first and second configurations corresponding to erected and collapsed conditions of the push chair, characterised in that:

the front legs and back rest portion are formed as an integral plastic moulding comprising a first said structural component in which the legs project from the back rest portion and in that the rear legs and seat portion are formed as an integral plastic moulding comprising a second said structural component in which the legs project from the seat portion the first and second structural components are interconnected so that the pair of legs of one of the first and second structural components straddle the other of the first and second structural components for pivotal movement, about a first horizontal axis, between first and second configurations respectively corresponding to erected and collapsed conditions of the push chair, in which the front legs extend, respectively, alongside the rear legs and diverge downwardly from the rear legs.

Thus, when the push chair is in its collapsed condition, resting on wheels provided on the front and rear legs which lie alongside each other, erection is simply effected by swinging the handle means from their second position, alongside the rear legs into their first position, extending away from the front legs. The front legs and rear legs roll apart and the push chair is locked in its erected condition by releasably locking the positioning means.

Stop surfaces are conveniently provided on the first and second structural components for engagement when the first and second structural components are in their first configuration so that the push chair provides a rigid support when in its erected condition.

The legs of the structural component which straddle the other structural component constitute outer legs having outer wheels respectively laterally offset from the axes of said outer legs and the legs of the other structural component constitute inner legs having inner wheels respectively aligned with the inner legs so as to be laterally inside the outer wheels so as to allow the front and rear legs to approach each other when the push chair is moved into its collapsed condition.

The handle means preferably comprise an inverted "U"-shaped member having a crosspiece and two side shafts respectively connected to opposite sides of the back rest portion for pivotal movement about the second horizontal axis between its first and second positions.

This arrangement leaves the underside of the back rest unobstructed so that it is possible to sling a receptacle from the back rest, between the side shafts of the inverted "U"-shaped member. This provides a convenient storage space for small items which can be stowed inside the wheelbase of the push chair so as to avoid instability.

In a preferred embodiment of the invention the first structural component may include an integrally formed foot rest extending between the front legs. Similarly, an integral brace may also be moulded so as to extend between the rear legs forming parts of the second structural component.

To return the push chair to its collapsed condition, it is merely necessary to release the positioning means and then to swing the handle means from their first position to their second position so that the links cause the front and rear legs to roll towards each other. This can be done simply by grasping the top of the push chair and lifting the push chair off its supporting surface.

This moulded plastic construction facilitates fabrication in that the first and second structural components may be integrally formed with the fittings necessary for interengagement with each other and with other components of the push chair. Thus, the pivotal interconnection between the first and second structural components may be provided by pins formed integrally in one of these components for reception in apertures formed in the other of these components. Similarly, the wheels may be mounted on axles for receipt in complementary apertures in bifurcated portions of the front and rear legs. In addition, one or both of the first and second structural components may be provided on both sides with locations for bosses for the reception of coupling members for coupling push chairs side-by-side for accommodating two or more children in interconnected push chairs.

The moulded construction of the first and second structural components permits the integral formation of fittings for the attachment of canopies for protection from rain or sunlight and for the attachment of seat and back rest padding, of hooks for the suspension of a receptacle below the back rest and of bosses for the attachment of other fittings such as "bumper bars" and trays. Similarly, the positioning means for releasably locking the handle means in their first position may include integral stop means formed in the sides of the back rest portion and both the seat portion and the back rest portion may be moulded to provide aesthetically pleasing and comfortably shaped structural components.

An embodiment of the invention is hereinafter described, by way of example only, with reference to and as illustrated in the accompanying drawings.

Brief description of the drawings

Figure 1 is a perspective view of a push chair in accordance with the present invention in its erected condition;

Figures 2 to 4 are side, front and rear elevational views of the push chair shown in Figure 1, with external fittings removed; and

Figures 5 and 6 are side and front elevational views of the push chair shown in Figures 2 to 4 disposed in its collapsed condition.

Mode for carrying out the invention

As shown in the drawings, the push chair has a first moulded structural component, comprising a back rest portion 1 and two front legs 3, and a second moulded structural component, comprising a seat portion 2 and two rear legs 4 extending from opposite sides of the seat portion 1, disposed between the two front legs 3 of the first moulded structural component. These two structural components are pivotally interconnected by means of integrally moulded projections on the insides of the front legs 3 which define a first horizontal axis 7 and are received in apertures formed in the sides of the seat portion 1. Both structural components are moulded from polypropylene mixed with up to 40% chalk filler, together with colouring material.

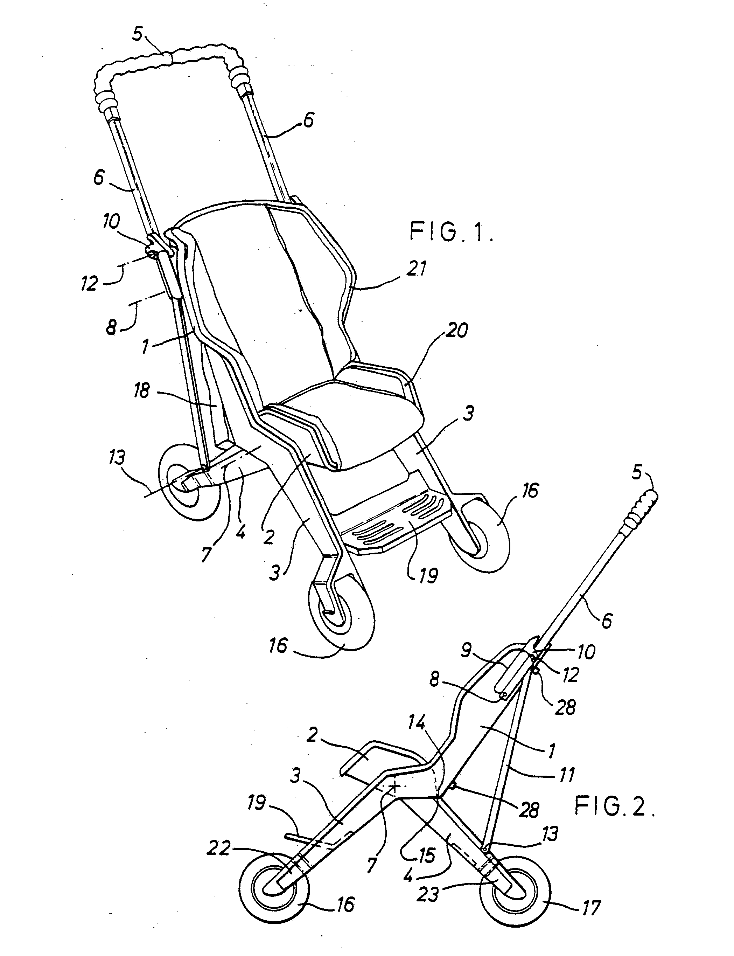

As shown in Figure 1, a receptacle in the form of a plastic bag 18 is slung below the back rest portion 1 by means of hooks integrally moulded with the remainder of the back portion 1. In addition, shaped cushions 20 and 21 are secured to the upper surfaces of the back rest portion 1 and the seat portion 2 to improve the comfort of the push chair. Comfort is also improved by utilising large wheels 16 and 17 having tyres of soft resilient material such as foamed poly (ethylene vinyl acetate).

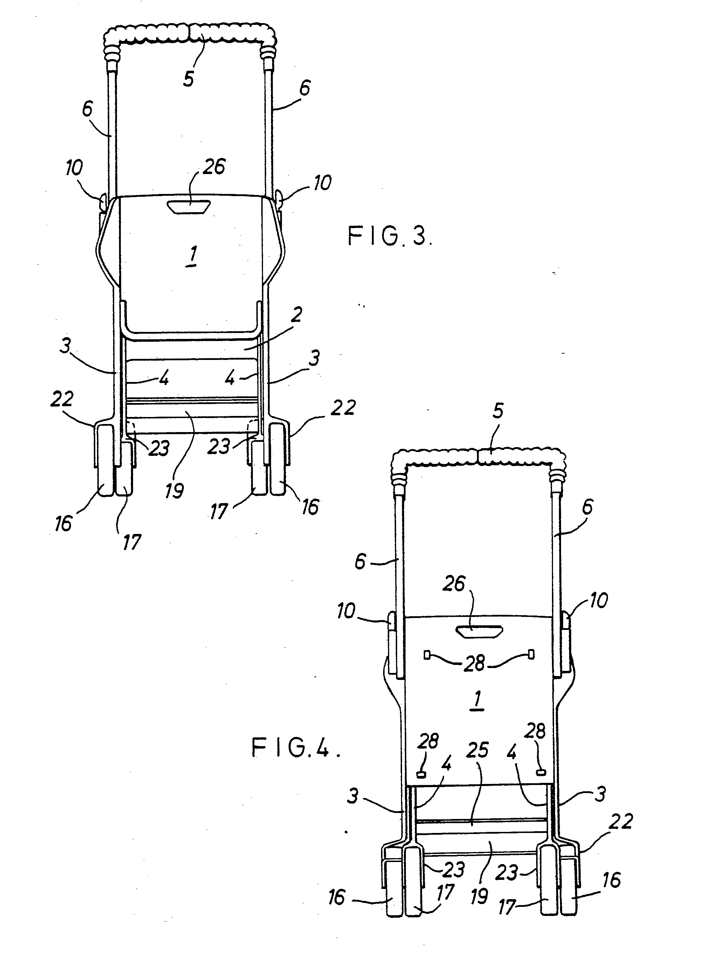

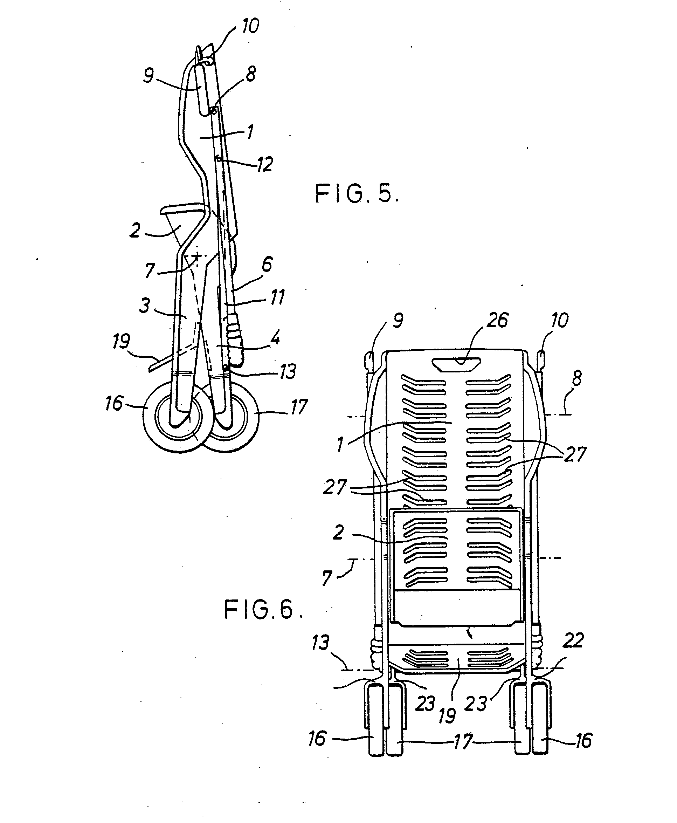

In order to enable the front and rear legs 3, 3 and 4, 4 to approach each other when the push chair is in its collapsed condition, as shown in Figure 5, outer wheels 16 fitted to the front legs 3, 3 are disposed laterally outside inner wheels 17 fitted to the rear legs 4, 4. Thus, as shown in Figure 4, the inner wheels 17 are fitted within bifurcations 23 extending symmetrically on opposite sides of the axes of the rear legs 4. The inner wheels 17 are rotatably mounted in the bifurcations 23 by means of integrally mounted on axles (not shown) which seat in internal recesses formed in the bifurcations 23 and fabrication is facilitated by providing moulded slots with lead-in ramps which enable the bifurcations 23 to be temporarily sprung apart before the inner wheels 17 are snapped into position. The outer wheels 16 are mounted in a similar manner, but in this case, as shown in Figure 6, the outer wheels 16 are mounted in laterally offset bifurcations 22 which are dimensioned such that, when the push chair is in its collapsed condition, as shown in Figure 5, the inner wheels 17 are disposed between the outer wheels 16.

An inverted "U"-shaped aluminium handle member of extruded box-section has a cross-piece 5 and two side shafts 6 which are pivotally connected to the sides of the back rest portion 1 by means of pivot pins defining a second horizontal axis 8 extending parallel to the first horizontal axis 7. The side shafts 6 are connected to the rear legs 4 by means of two links 11 by means of pivot pins aligned on third and fourth horizontal axes 12 and 13 extending parallel to the first and second horizontal axes 7 and 8.

Stop surfaces 14 and 15 respectively formed on the front and rear legs 3, 3 and 4, 4 come into abutting engagement when the push chair is in its erected condition so as to prevent the front and rear legs 3 and 4 from spreading further apart. Similarly, stops 9 formed in opposite sides of the back rest portion 1 prevent the side shafts 6 of the handle member from moving upwardly beyond a first position which the handle member occupies when the chair is in its erected condition. Spring loaded hooks 10 are mounted on the stops 9 for releasable engagement with extensions of the pivot pins defining the third horizontal axis 12 for locking the handle member in its first position and thereby locking the push chair in its erected condition. Although only shown schematically, one of the hooks 10 latches automatically when the handle member is in its first position and the other hook must be latched manually, in accordance with British Standards Institute safety regulations.

To collapse the push chair, it is merely necessary to release the manually latched hook 10 and then the automatically latched hook 10 and, thereafter, to grasp the upper end of the back rest portion 1 and lift the push chair off its supporting surface. The front and rear legs 3, 3 and 4, 4 swing towards each other under their own weight and, during this movement, links 11 cause the side shafts 6 of the handle member to move until they lie alongside the rear legs 4. The collapsible push chair is then free-standing on its four wheels and can be conveniently stored in a small space. To re-erect the push chair, it is merely necessary to swing the handle member 5 and 6, upwards from its second position, in which the side shafts 6 lie alongside the rear legs 4, 4, to its first position and then to engage the hooks 10. This can be done with one hand when the other hand is being used to hold a child to be placed into the erected push chair.

Lateral stability is improved by the provision of a foot rest 19 extending between the front legs 3, 3 and forming an integral part of the first structural component. A similar effect may be achieved by providing a stiffener which extends between the rear legs 4, 4 and is formed integrally with the remainder of the second structural component. As shown, the back rest portion 1, the seat portion 2, the foot rest 19 and the stiffener 25 may be of slotted configuration in order to save moulding material and avoid unnecessary weight. An aperture 26 may also be formed in the back rest portion 1 in order to facilitate lifting and folding of the push chair into its collapsed condition. The moulded construction of the first and second structural components also lends itself to the formation of non-uniform cross-sections so that the more heavily loaded parts of these structural components may be dimensioned accordingly. Similarly, the seat portion 1 may be moulded with integral side edges and the sides of the back rest portion 3 may be formed with outwardly flared "wings". It is also possible to form the moulded plastic parts with slots 27, as shown in Figure 6, but omitted from the other figures for clarity. Integrally moulded lugs 28, may also be provided on the back rest portion for supporting a receptacle 18 as shown in Figure 1.

## Claims

1. A collapsible push chair comprising a back rest portion, a seat portion, pairs of front and rear legs supporting the seat and back rest portions, handle means comprising at least one shaft connected to the back rest portion for pivotal movement about a second horizontal axis parallel to a first horizontal axis between first and second positions, respectively corresponding to the erected and collapsed conditions of the push chair, in which said shaft extends, respectively, away from the front legs and alongside the rear legs, positioning means being provided for releasably locking said shaft relative to the back rest portion when the push chair is in its erected condition, and link means extending between pivotal connections with said shaft and at least one of the rear legs for pivotal movement about third and fourth horizontal axes which are parallel to the first and second horizontal axes so that movement of said shaft between its first and second positions effects movement of first and second structural components between their first and second configurations corresponding to erected and collapsed conditions of the push chair, characterised in that:

the front legs (3,3) and back rest portion (1) are formed as an integral plastic moulding comprising a first said structural component (1 and 3,3) in which the legs (3,3) project from the back rest portion (1) and in that the rear legs (4,4) and seat portion (2) are formed as an integral plastic moulding comprising a second said structural component (2 and 4,4) in which the legs (4,4) project from the seat portion (2) the first and second structural components (1 and 3,3, and 2 and 4,4) are interconnected so that the pair of legs (3,3 or 4,4) of one of the first and second structural components (1 and 3,3, or 2 and 4,4) straddle the other of the first and second structural components (2 and 4,4 or 1 and 3,3) for pivotal movement, about a first horizontal axis (7), between first and second configurations respectively corresponding to erected and collapsed conditions of the push chair, in which the front legs (3,3) extend, respectively, alongside the rear legs (4,4) and diverge downwardly from the rear legs (4,4).

2. A collapsible push chair according to Claim 1, in which stop surfaces (14 and 15) are provided on the first and second structural components (1 and 3,3 and 2 and 4,4) for engagement when the first and second structural components (1 and 3,3, and 4,4) are in their first configuration.

3. A collapsible push chair according to Claim 1 or Claim 2, in which the legs (3,3 or 4,4) of said one of the first and second structural components (1 and 3,3 or 2 and 4,4) are provided with outer wheels (16) respectively laterally offset from the axes of said legs (3,3 or 4,4) and the legs (4,4 or 3,3) of said other of the first and second structural components (2 and 4,4, or 1 and 3,3) are provided with inner wheels (17) respectively aligned with the legs (4,4 or 3,3) of the other of the first and second structural components (2 and 4,4 or 1 and 3,3) so as to be laterally inside the outer wheels (16).

4. A collapsible push chair according to any preceding claim, in which the handle means comprise an inverted "U"-shaped member (5 and 6,6) having a cross-piece (5) and two side shafts (6) respectively connected to opposite sides of the back rest portion (2) for pivotal movement about the second horizontal axis (8) for movement of each said side shaft (6) between its first and second positions.

5. A collapsible push chair according to Claim 4, in which a receptacle (18) is slung from the back rest portion (1), between the side shafts (6) of the "U"-shaped member (5 and 6,6).

6. A collapsible push chair according to any preceding claim, in which the first structural component (1 and 3,3) includes an integrally-formed foot rest (19) extending between the front legs (3,3).

## Patentansprüche

1. Zusammenlegbarer Schiebesessel bzw. Kinderwagen umfassend einen Rückenlehnenabschnitt, einen Sitzabschnitt, Paare von vorderen und hinteren Beinen, die den Sitzabschnitt und Rückenlehnenabschnitt abstützen, eine Handgriffeinrichtung, die wenigstens eine Stange umfaßt, die mit dem Rückenlehnenabschnitt für die Schwenkbewegung um eine zweite horizontale Achse, die parallel zu einer ersten horizontalen Achse verläuft, zwischen einer ersten und einer zweiten Stellung verbunden ist, die jeweils dem aufgestellten und zusammengelegten Zustand des Schiebesessels entspricht, in dem sich die genannte Stange jeweils weg von den Vorderbeinen und entlang den Hinterbeinen erstreckt, wobei eine Positionierungseinrichtung vorgesehen ist, um die genannte Stange lösbar in bezug auf den Rückenlehnenabschnitt zu verriegeln, wenn sich der Schiebesessel in seinem aufgestellten Zustand befindet, und sich eine Verbindungseinrichtung zwischen Schwenkverbindungen mit der genannten Stange und wenigstens einem der Hinterbeine für die Schwenkbewegung um dritte und vierte horizontale Achsen erstreckt, die parallel zur ersten und zweiten horizontalen Achse sind, sodaß eine Bewegung der genannten Stange zwischen ihrer ersten und zweiten Stellung die Bewegung von ersten und zweiten Konstruktionsbestandteilen zwischen ihrer ersten und zweiten Konfiguration bewirkt, die den aufgestellten und zusammengelegten Zuständen des Schiebesessels entspricht, dadurch gekennzeichnet, daß

die Vorderbeine (3,3) und der Rückenlehnenabschnitt (1) als einstückiger Kunststoff-Formteil ausgebildet sind, umfassend einen ersten genannten Konstruktionsbestandteil (1 und 3,3), bei dem die Beine (3,3) aus dem Rückenlehnenabschnitt (1) hervorragen, und daß die Hinterbeine (4,4) und der Sitzabschnitt (2) als einstückiger Kunststoff-Formteil ausgebildet sind, umfassend einen zweiten genannten Konstruktionsbestandteil (2 und 4,4), bei dem die Beine (4,4) vom Sitzabschnitt (2) hervorragen, wobei der erste und zweite Konstruktionsbestandteil (1 und 3,3 und 2 und 4,4) so untereinander verbunden sind, daß das Beinpaar (3,3 oder 4,4) von einem der ersten und zweiten Konstruktionsbestandteile (1 und 3,3 oder 2 und 4,4) den anderen der ersten und zweiten Konstruktionsbestandteile (2 und 4,4 oder 1 und 3,3) überspreizt bzw. überspannt bzw. überkreuzt für eine Schwenkbewegung um eine erste horizontale Achse (7) zwischen ersten und zweiten Konfigurationen, die jeweils dem aufgestellten und zusammengelegten Zustand des Schiebesessels entsprechen, in dem sich die Vorderbeine (3,3) jeweils entlang den Hinterbeinen (4,4) erstrecken und nach unten von den Hinterbeinen (4,4) divergieren.

2. Zusammenlegbarer Schiebesessel bzw. Kinderwagen nach Anspruch 1 in dem Arretierungsflächen (14 und 15) auf den ersten und zweiten Konstruktionsbestandteilen (1 und 3,3 und 2 und 4,4) zur Einrastung vorgesehen sind, wenn die ersten und zweiten Konstruktionsbestandteile (1 und 3,3, und 4,4) in ihrer ersten Konfiguration sind.

3. Zusammenlegbarer Schiebesessel bzw. Kinderwagen nach Anspruch 1 oder Anspruch 2, worin die Beine (3,3 oder 4,4) von besagter eins der ersten und zweiten Konstruktionsbestandteile (1 und 3,3 oder 2 und 4,4) versehen sind mit Aussenrädern (16) bzw. lateral versetzt von den Achsen der besagten Beine (3,3 oder 4,4) und die Beine (4,4 oder 3,3) des besagten anderen der ersten und zweiten Konstruktionsbestandteile (2 und 4,4, oder 1 und 3,3) mit Innenrädern (17) versehen sind, welche bzw. mit den Beinen (4,4 oder 3,3) der anderen der ersten und zweiten Konstruktionsbestandteile (2 und 4,4 oder 1 und 3,3) ausgerichtet sind, so dass sie lateral innerhalb der Aussenräder (16) sind.

4. Zusammenlegbarer Schiebesessel bzw. Kinderwagen nach irgendeinem der vorhergehenden Ansprüche, in dem die Handgriffeinrichtung ein invertiertes "U"-förmiges Glied (5 und 6,6) umfasst mit einer Quersprosse (5) und zwei Seitenwellen (6) wovon jede an den entgegengesetzten Seiten des Rückenlehnenabschnitts (2) angebracht ist für schwenkbare Bewegung um die zweite Horizontalachse (8) zur Bewegung von jeder besagten Seitenwelle (6) zwischen ihren ersten und zweiten Positionen.

5. Zusammenlegbarer Schiebesessel bzw. Kinderwagen nach Anspruch 4, in dem ein Behälter (18) von dem Rückenlehnenabschnitt (1) zwischen den Seitenwellen (6) des "U"-förmigen Glieds (5 und 6,6) suspendiert ist.

6. Zusammenlegbarer Schiebesessel bzw. Kinderwagen nach irgend einem der vorangehenden Ansprüche in dem der erste Konstruktionsbestandteil (1 und 3,3) eine integral geformte Fussstütze (19) die sich zwischen den Vorderbeinen (3,3) erstreckt, umfasst.

## Revendications

1. Poussette repliable comprenant un dossier, une surface de siège, des jambes avant et arrière supportant le siège et le dossier, une poignée comportant au moins un arbre relié au dossier pour permettre un mouvement de pivotement entre une première et une seconde position autour d'un axe horizontal parallèle à un premier, lesdites positions correspondant aux positions respectives de dépliage et de repliage de la poussette, pour laquelle ledit arbre s'étend respectivement à partir des jambes avants et le long des jambes arrières, des moyens de verrouillage débloquables prévus pour bloquer ledit arbre par rapport au dossier, lorsque la poussette est dépliée, et des moyens de liaison s'étendant entre des attaches pivotantes et ledit arbre et au moins une des jambes arrières, de manière à pivoter autour d'un troisième et d'un quatrième axe, ceux-ci étant parallèles aux premier et second axes, de sorte que le mouvement dudit arbre entre sa première et sa seconde position entraîne le mouvement des premier et second éléments de structure, lorsque la poussette passe d'une première à une deuxième position, correspondant aux positions dépliée et repliée de celle-ci, caractérisée en ce que les jambes avants (3,3) et le dossier (1) sont réalisés sous la forme d'une pièce unique moulée en matière plastique comprenant un premier élément (1 et 3,3) dont les jambes (3,3) partent du dossier (1) et en ce que les jambes arrières (4,4) et le siège (2) sont réalisés sous la forme d'une pièce unique moulée en matière plastique comprenant un deuxième élément (2 et 4,4) dont les jambes arrières (4,4) sont issues du siège (2), les premier et second éléments (1 et 3,3 et 2 et 4,4) étant reliés entre aux, de manière à ce que la paire de jambes (3,3 ou 4,4) du premier ou second élément (1 et 3,3 ou 2 et 4,4) écarte l'autre paire appartenant aux premier et second éléments (2 et 4,4 ou 1 et 3,3) pour pivoter autour d'un premier axe horizontal (7) lorsque la poussette passe de sa première à sa deuxième position correspondant respectivement à ses positions dépliée et repliée suivant lesquelles les jambes avants (3,3) s'étendent respectivement le long des jambes arrières (4,4) et divergent vers le bas par rapport à ces dernières.

2. Poussette repliable selon la revendication 1, dans laquelle des surfaces d'arrêt (14 et 15) sont prévues sur les premiers et seconds éléments (1 et 3,3 et 2 et 4,4) pour enclenchement quand les premiers et seconds éléments (1 et 3,3, et 4,4) se trouvent dans leur première configuration.

3. Poussette repliable selon la revendication 1 ou la revendication 2 dans laquelle les jambes (3,3 ou 4,4) de ladite une des premiers et seconds éléments (1 et 3,3 ou 2 et 4,4) sont prévus de roues extérieures (16) respectivement laterallement décalés des axes de lesdites jambes (3,3 ou 4,4) et les jambes (4,4 ou 3,3) de ladite autre des premiers et seconds éléments (2 et 4,4, ou 1 et 3,3) sont prévus de roues intérieures (17) respectivement alignées avec les jambes (4,4 ou 3,3) de l'autre des premiers et seconds éléments (2 et 4,4 ou 1 et 3,3) afin d'être laterallement à l'intérieur des roues extérieures (16).

4. Poussette repliable selon l'une quelconque des revendications antérieures dans laquelle la poignée comprend un membre en forme de "U" renversé (5 et 6,6) avec une traverse (5) et deux arbres latéraux (6) connectés respectivement aux côtés opposés du dossier (2) pour mouvement pivotal autour du second axe horizontal (8) pour mouvement de chaque ladite arbre latéral (6) entre ses premiers et deuxièmes positions.

5. Poussette repliable selon la revendication 4 dans laquelle un récipient (18) est suspendue du dossier (1) entre les arbres laterals (6) du membre en forme de "U" (5 et 6,6).

6. Poussette repliable selon l'une quelconque des revendications dans laquelle le premier élément (1 et 3,3) comprend un support de pied intégral (19) qui s'étend entre les jambes de devant (3,3).

0 136 056

FIG. 1.

FIG. 2.

1

FIG.3.

1

FIG.4.

1

0 136 056

FIG. 5.

FIG. 6.

3